# EUROPEAN PATENT SPECIFICATION

(11) **EP 0 650 513 B1**
(45) Date of publication and mention of the grant of the patent: **12.03.1997**
(21) Application number: 93918164.0
(22) Date of filing: 13.07.1993
(51) Int. Cl.: C09K 5/04, C09K 3/30, C08J 9/14

(54) **REFRIGERANT COMPOSITIONS INCLUDING 1,1,2,2-TETRAFLUOROETHANE**
KÜHLZUSAMMENSETZUNGEN DIE 1,12,2-TETRAFLUORETHAN ENTHALTEN
COMPOSITIONS DE REFRIGERANT COMPRENANT DU 1,1,2,2-TETRAFLUOROETHANE

(30) Priority: 15.07.1992 US 913642; 09.07.1993 US 89004
(43) Date of publication of application: 03.05.1995
(73) Proprietor: E.I. DU PONT DE NEMOURS AND COMPANY, Wilmington Delaware 19898 (US)
(72) Inventor: MINOR, Barbara Haviland, Elkton, MD 21921 (US); PATRON, Donna Marie, Newark, DE 19702 (US); KLUG, Diana Lynn, Wilmington, DE 19809 (US); LUNGER, Brooks Shawn, Newark, DE 19702 (US)
(74) Representative: Woodcraft, David Charles
(86) International application number: US9306451
(87) International publication number: WO9402563

(56) References cited:
- EP-A- 0 483 573
- WO-A-92/17558
- DATABASE WPI Section Ch, Week 9226, Derwent Publications Ltd., London, GB; Class E16, AN 92-212128 & JP,A,4 139 293 (DAIKIN KOGYO KK) 13 May 1992

## Description

### FIELD OF THE INVENTION

This invention relates to refrigerant compositions that include 1,1,2,2-tetrafluoroethane as a component. This invention also relates to binary azeotropic or azeotrope-like compositions that include 1,1,2,2-tetrafluoroethane, said compositions being useful as cleaning agents, expansion agents for polyolefins and polyurethanes, aerosol propellants, refrigerants, heat transfer media, gaseous dielectrics, fire extinguishing agents, power cycle working fluids, polymerization media, particulate removal fluids, carrier fluids, buffing abrasive agents, and displacement drying agents.

### BACKGROUND OF THE INVENTION

Fluorinated hydrocarbons have many uses, one of which is as a refrigerant. Such refrigerants include dichlorodifluoromethane (CFC-12) and chlorodifluoromethane (HCFC-22).

In recent years it has been pointed out that certain kinds of fluorinated hydrocarbon refrigerants released into the atmosphere may adversely affect the stratospheric ozone layer. Although this proposition has not yet been completely established, there is a movement toward the control of the use and the production of certain chlorofluorocarbons (CFCs) and hydrochlorofluorocarbons(HCFCs) under an international agreement.

Accordingly, there is a demand for the development of refrigerants that have a lower ozone depletion potential than existing refrigerants while still achieving an acceptable performance in refrigeration applications. Hydrofluorocarbons (HFCs) have been suggested as replacements for CFCs and HCFCs since HFCs have no chlorine and therefore have zero ozone depletion potential.

In refrigeration applications, a refrigerant is often lost during operation through leaks and shaft seals, hose connections, soldered joints and broken lines. In addition, the refrigerant may be released to the atmosphere during maintenance procedures on refrigeration equipment. If the refrigerant is not a pure component or an azeotrope or azeotrope-like composition, the refrigerant composition may change when leaked or discharged to the atmosphere from the refrigeration equipment, causing the refrigerant to become flammable or to have poor refrigeration performance.

Accordingly, it is desirable to use as a refrigerant a single fluorinated hydrocarbon or an azeotropic or azeotrope-like composition that includes one or more fluorinated hydrocarbons.

Fluorinated hydrocarbons may also be used a cleaning agent or solvent to clean, for example, electronic circuit boards. It is desirable that the cleaning agents be azeotropic or azeotrope-like because in vapor degreasing operations the cleaning agent is generally redistilled and reused for final rinse cleaning.

Azeotropic or azeotrope-like compositions that include a fluorinated hydrocarbon are also useful as blowing agents in the manufacture of closed-cell polyurethane, phenolic and thermoplastic foams, as propellants in aerosols, as heat transfer media, gaseous dielectrics, fire extinguishing agents, power cycle working fluids, such as for heat pumps, inert media for polymerization reactions, fluids for removing particulates from metal surfaces, as carrier fluids that may be used, for example, to place a fine film of lubricant on metal parts, or as buffing abrasive agents to remove buffing abrasive compounds from polysurfaces such as metal, as displacement drying agents for removing water, such as from jewelry or metal parts, as resist developers in conventional circuit manufacturing techniques including chlorine-type developing agents, and as strippers for photoresists when used with, for example, a chlorohydrocarbon, such as 1,1,1-trichloroethane or trichloroethylene.

### SUMMARY OF THE INVENTION

The present invention relates to the discovery of refrigerant compositions that include 1,1,2,2-tetrafluoroethane as a component, said compositions being useful as cleaning agents, expansion agents for polyolefins and polyurethanes, aerosol propellants, refrigerants, heat transfer media, gaseous dielectrics, fire extinguishing agents, power cycle working fluids, polymerization media, particulate removal fluids, carrier fluids, buffing abrasive agents, and displacement drying agents. Further, the invention relates to the discovery of binary azeotropic or azeotrope-like compositions comprising effective amounts of 1,1,2,2-tetrafluoroethane and a second component to form an azeotropic or azeotrope-like composition.

### DETAILED DESCRIPTION

The present invention relates to compositions of 1,1,2,2-tetrafluoroethane (HFC-134), boiling point = -19.7°C, and at least one of the following components:
1. 1,1,1,2,2,3,3-heptafluoropropane (HFC-227ca, or CHF₂CF₂CF₃, boiling point = -17.0°C),
2. 1,1,1,2,2-pentafluoropropane (HFC-245cb or CF₃CF₂CH₃, boiling point = -17.5°C),
3. Tris(trifluoromethyl)amine (CF₃)₃N, boiling point = -6.5°C),
4. Trifluoromethylsulfur pentafluoride (SF₅CF₃, boiling point = -20.4°C),
5. Cyclopropane (C₃H₆, boiling point = -32.8°C),
6. Perfluorocyclopropane (C216, or CF₂CF₂CF₂ (cyclic), boiling point = -31.5°C),
7. Fluoroethane (HFC-161, or CH₃CFH₂, boiling point = -37.7°C),
8. 1,1,1-trifluoropropane (HFC-263fb, or CH₃CH₂CF₃, boiling point = -13.0°C),
9. 2,2-difluoropropane (HFC-272ca, or CH₃CF₂CH₃, boiling point = -0.4°C),
10. 2-fluoropropane (HFC-281ea, or CH₃CHFCH₃, boiling point = -9.4°C),
11. 1-fluoropropane (HFC-281fa, or CH₃CH₂CH₂F, boiling point = -2.5°C).

HFC-227ca (1,1,2,2,3,3,3-heptafluoropropane, CAS Reg. No. 2252-84-8) has been prepared by reaction of 2,2,3,3-tetrafluoropropionic acid with SF₄ in the presence of boron trifluoride as reported by Hasek, et. al. in J. Am. Chem. Soc., Vol. 82, pp. 543-551 (1960).

HFC-245cb (CAS Reg. No. 1814-88-6) can be made by reaction of methyl chloride and cesium fluoride with tetrafluoroethylene in triethylene glycol dimethyl ether as disclosed by Yale in U. S. Patent 3,381,042.

(CF₃)₃N (CAS Reg. No. 432-03-1) has been made by electrochemical fluorination of trimethyl amine in anhydrous hydrogen fluoride as disclosed by Kauck and Simons in U. S. Patent 2,616,927.

SF₅CF₃ (CAS Reg. No. 373-80-8) has been made by electrochemical fluorination of thiourea as reported by Schmeisser and Huber in Z. Naturforsch., Sect. B, Vol. 21, pp. 285-286 (1966).

C216 (CAS Reg. No. 931-91-9) has been made by photolysis of tetrafluoroethylene in the presence of ethylene diluent as disclosed by Mastrangelo in U. S. Patent 3,228,864.

HFC-263fb (GAS Reg. No. 421-07-8) has been prepared by reaction of 1,1-dichloropropene with HF at 90-100C as reported by McBee, et. al. in J. Am. Chem. Soc., Vol. 69, pp. 944-947 (1947).

HFC-272ca (GAS Reg. No. 420-45-1) has been made by fluorination of 2,2-dichloropropane with SbF3 as reported by Henne and Renoll in J. Am. Chem. Soc., Vol. 59, pp. 2434-2436 (1937).

HFC-161 (CAS Reg. No. 353-36-6), HFC-281ea (isopropyl fluoride, CAS Reg. No. 420-26-8), and HFC-281fa (n-propyl fluoride, CAS Reg. No. 460-13-9) have been prepared by reaction of hydrogen fluoride with ethylene, propylene, and cyclopropane, respectively, as reported by Grosse and Lin in J. Org. Chem., Vol. 3, pp. 26-32 (1938).

The following compositions can be used as refrigerants.

**TABLE 1**

| Composition No. | | |
|---|---|---|
| 1 | 1-99 wt% HFC-134 | 1-99 wt% HFC-227ca |
| 2 | 1-99 wt% HFC-134 | 1-99 wt% HFC-245cb |
| 3 | 5-95 wt% HFC-134 | 5-95 wt% (CF₃)₃N |
| 4 | 1-71 wt% HFC-134 | 29-99 wt% SF₅CF₃ |
| 5 | 1-99 wt% HFC-134 | 1-99 wt% cyclopropane |
| 6 | 1-99 wt% HFC-134 | 1-99 wt% C216 |
| 7 | 1-95 wt% HFC-134 | 5-99 wt% HFC-161 |
| 8 | 5-99 wt% HFC-134 | 1-95 wt% HFC-263fb |
| 9 | 5-99 wt% HFC-134 | 1-95 wt% HFC-272ca |
| 10 | 5-99 wt% HFC-134 | 1-95 wt% HFC-281ea |
| 11 | 5-99 wt% HFC-134 | 1-95 wt% HFC-281fa |

The present invention also relates to the discovery of azeotropic or azeotrope-like compositions of effective amounts of HFC-134 and a second component to form an azeotropic or azeotrope-like composition, wherein the second component is HFC-227ca, HFC-245cb, (CF₃)₃N, SF₅CF₃, cyclopropane, C216, HFC-161, HFC-263fb, HFC-272ca, HFC-281ea or HFC-281fa.

By "azeotropic" composition is meant a constant boiling liquid admixture of two or more substances that behaves as a single substance. One way to characterize an azeotropic composition is that the vapor produced by partial evaporation or distillation of the liquid has the same composition as the liquid from which it was evaporated or distilled, that is, the admixture distills/refluxes without compositional change. Constant boiling compositions are characterized as azeotropic because they exhibit either a maximum or minimum boiling point, as compared with that of the non-azeotropic mixtures of the same components.

By "azeotrope-like" composition is meant a constant boiling, or substantially constant boiling, liquid admixture of two or more substances that behaves as a single substance. One way to characterize an azeotrope-like composition is that the vapor produced by partial evaporation or distillation of the liquid has substantially the same composition as the liquid from which it was evaporated or distilled, that is, the admixture distills/refluxes without substantial composition change.

It is recognized in the art that a composition is azeotrope-like if, after 50 weight percent of the composition is removed such as by evaporation or boiling off, the difference in vapor pressure between the original composition and the composition remaining after 50 weight percent of the original composition has been removed is less than 10 percent, when measured in absolute units. By absolute units, it is meant measurements of pressure and, for example, psia, atmospheres, bars, torr, dynes per square centimeter, millimeters of mercury, inches of water and other equivalent terms well known in the art. If an azeotrope is present, there is no difference in vapor pressure between the original composition and the composition remaining after 50 weight percent of the original composition has been removed.

Therefore, included in this invention are compositions of effective amounts of HFC-134 and a second component, wherein the second component is HFC-227ca, HFC-245cb, (CF₃)₃N, SF₅CF₃, cyclopropane, C216, HFC-161, HFC-263fb, HFC-272ca, HFC-281ea or HFC-281fa such that after 50 weight percent of an original composition is evaporated or boiled off to produce a remaining composition, the difference in the vapor pressure between the original composition and the remaining composition is 10 percent or less.

Substantially constant boiling, azeotropic or azeotrope-like compositions of this invention comprise the following (all compositions are measured at 25°C):
1. 1-99, preferably 40-90, most preferably 61.1 wt% HFC-134; 1-99, preferably 10-60, most preferably 38.9 wt% HFC-227ca.
2. 1-99, preferably 30-90, most preferably 60.4 wt% HFC-134; 1-99, preferably 10-70, most preferably 39.6 wt% HFC-245cb.
3. 27-84, preferably 40-70, most preferably 56.4 wt% HFC-134; 16-73, preferably 30-60, most preferably 43.6 wt% (CF₃)₃N.
4. 1-71, preferably 37.8 wt% HFC-134; 29-99, preferably 62.2 wt% SF₅CF₃.
5. 1-84, preferably 40-84, most preferably 50.5 wt% HFC-134; 16-99, preferably 16-60, most preferably 49.5 wt% cyclopropane.
6. 1-99, preferably 10-50, most preferably 29.2 wt% HFC-134; 1-99, preferably 50-90, most preferably 70.8 wt% FC-C216.
7. 1-84, preferably 1-50, most preferably 113 wt% HFC-134; 16-99, preferably 50-99, most preferably 88.7 wt% HFC-161.
8.. 31-99, preferably 50-90, most preferably 67.2 wt% HFC-134; 1-69, preferably 10-50, most preferably 32.8 wt% HFC-263fb.
9. 51-99, preferably 70-99, most preferably 84.0 wt% HFC-134; 1-49, preferably 1-30, most preferably 16.0 wt% HFC-272ca.
10. 48-99, preferably 70-99, most preferably 84.7 wt% HFC-134; 1-52, preferably 1-30, most preferably 15.3 wt% HFC-281ea.
11. 58-99, preferably 80-99, most preferably 93.8 wt% HFC-134; 1-42, preferably 1-20, most preferably 6.2 wt% HFC-281fa.

For purposes of this invention, "effective amount" is defined as the amount of each component of the inventive compositions which, when combined, results in the formation of an azeotropic or azeotrope-like composition. This definition includes the amounts of each component, which amounts may vary depending on the pressure applied to the composition so long as the azeotropic or azeotrope-like compositions continue to exist at the different pressures, but with possible different boiling points.

Therefore, effective amount includes the amounts, such as may be expressed in weight percentages, of each component of the compositions of the instant invention which form azeotropic or azeotrope-like compositions at temperatures or pressures other than as described herein.

For the purposes of this discussion, azeotropic or constant-boiling is intended to mean also essentially azeotropic or essentially-constant boiling. In other words, included within the meaning of these terms are not only the true azeotropes described above, but also other compositions containing the same components in different proportions, which are true azeotropes at other temperatures and pressures, as well as those equivalent compositions which are part of the same azeotropic system and are azeotrope-like in their properties. As is well recognized in this art, there is a range of compositions which contain the same components as the azeotrope, which will not only exhibit essentially equivalent properties for refrigeration and other applications, but which will also exhibit essentially equivalent properties to the true azeotropic composition in terms of constant boiling characteristics or tendency not to segregate or fractionate on boiling.

It is possible to characterize, in effect, a constant boiling admixture which may appear under many guises, depending upon the conditions chosen, by any of several criteria:
* The composition can be defined as an azeotrope of A, B, C (and D...) since the very term "azeotrope" is at once both definitive and limitative, and requires that effective amounts of A, B, C (and D...) for this unique composition of matter which is a constant boiling composition.
* It is well known by those skilled in the art, that, at different pressures, the composition of a given azeotrope will vary at least to some degree, and changes in pressure will also change, at least to some degree, the boiling point temperature. Thus, and azeotrope of A, B, C (and D...) represents a unique type of relationship but with a variable composition which depends on temperature and/or pressure. Therefore, compositional ranges, rather than fixed compositions, are often used to define azeotropes.
* The composition can be defined as a particular weight percent relationship or mole percent relationship of A, B, C (and D...), while recognizing that such specific values point out only one particular relationship and that in actuality, a series of such relationships, represented by A, B, C (and D...) actually exist for a given azeotrope, varied by the influence of pressure.
* An azeotrope of A, B, C (and D...) can be characterized by defining the compositions as an azeotrope characterized by a boiling point at a given pressure, thus giving identifying characteristics without unduly limiting the scope of the invention by a specific numerical composition, which is limited by and is only as accurate as the analytical equipment available.

The azeotrope or azeotrope-like compositions of the present invention can be prepared by any convenient method including mixing or combining the desired amounts. A preferred method is to weigh the desired component amounts and thereafter combine them in an appropriate container.

Specific examples illustrating the invention are given below. Unless otherwise stated therein, all percentages are by weight. It is to be understood that these examples are merely illustrative and in no way are to be interpreted as limiting the scope of the invention.

### EXAMPLE 1

### Phase Study

A phase study on the following compositions, wherein the composition is varied and the vapor pressures is measured, at a constant temperature of 25°C, shows that the following compositions are azeotropic.

| Composition No. | | | Vapor Press. psia (kPa) |
|---|---|---|---|
| 1 | 61.1 wt% HFC-134 | 38.9 wt% HFC-227ca | 80.4 (554) |
| 2 | 60.4 wt% HFC-134 | 39.6 wt% HFC-245cb | 81.2 (560) |
| 3 | 56.4 wt% HFC-134 | 43.6 wt% (CF₃)₃N | 92.3 (636) |
| 4 | 37.8 wt% HFC-134 | 62.2 wt% SF₅CF₃ | 106.2 (732) |
| 5 | 50.5 wt% HFC-134 | 49.5 wt% cyclopropane | 123.0 (848) |
| 6 | 29.2 wt% HFC-134 | 70.8 wt% C216 | 103.9 (716) |
| 7 | 11.3 wt% HFC-134 | 88.7 wt% HFC-161 | 130.5 (900) |
| 8 | 67.2 wt% HFC-134 | 32.8 wt% HFC-263fb | 87.3 (602) |
| 9 | 84.0 wt% HFC-134 | 16.0 wt% HFC-272ca | 80.3 (554) |
| 10 | 84.7 wt% HFC-134 | 15.3 wt% HFC-281ea | 81.6 (563) |
| 11 | 93.8 wt% HFC-134 | 6.2 wt% HFC-281fa | 76.9 (530) |

### EXAMPLE 2

### Impact of Vapor Leakage on Vapor Pressure at 25°C

A vessel is charged with an initial composition at 25°C, and the vapor pressure of the composition is measured. The composition is allowed to leak from the vessel, while the temperature is held constant at 25°C, until 50 weight percent of the initial composition has been removed, at which time the vapor pressure of the composition remaining in the vessel is measured. The results are summarized below.

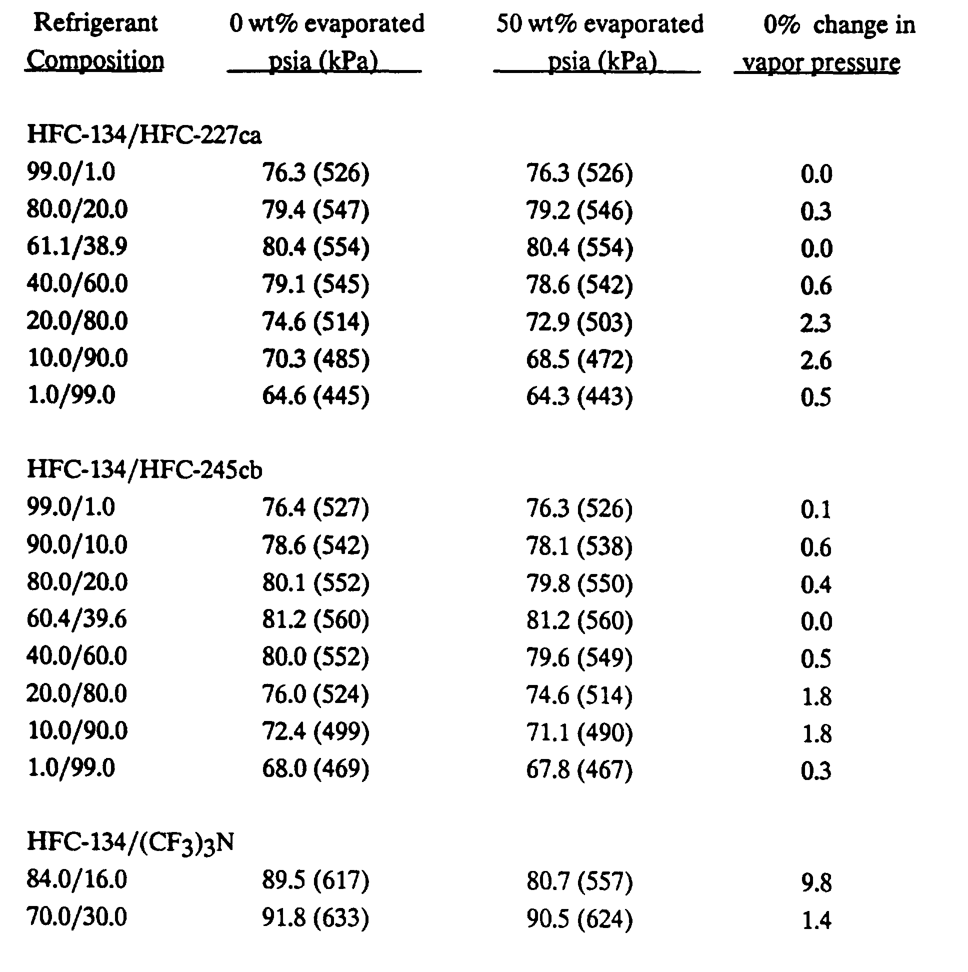

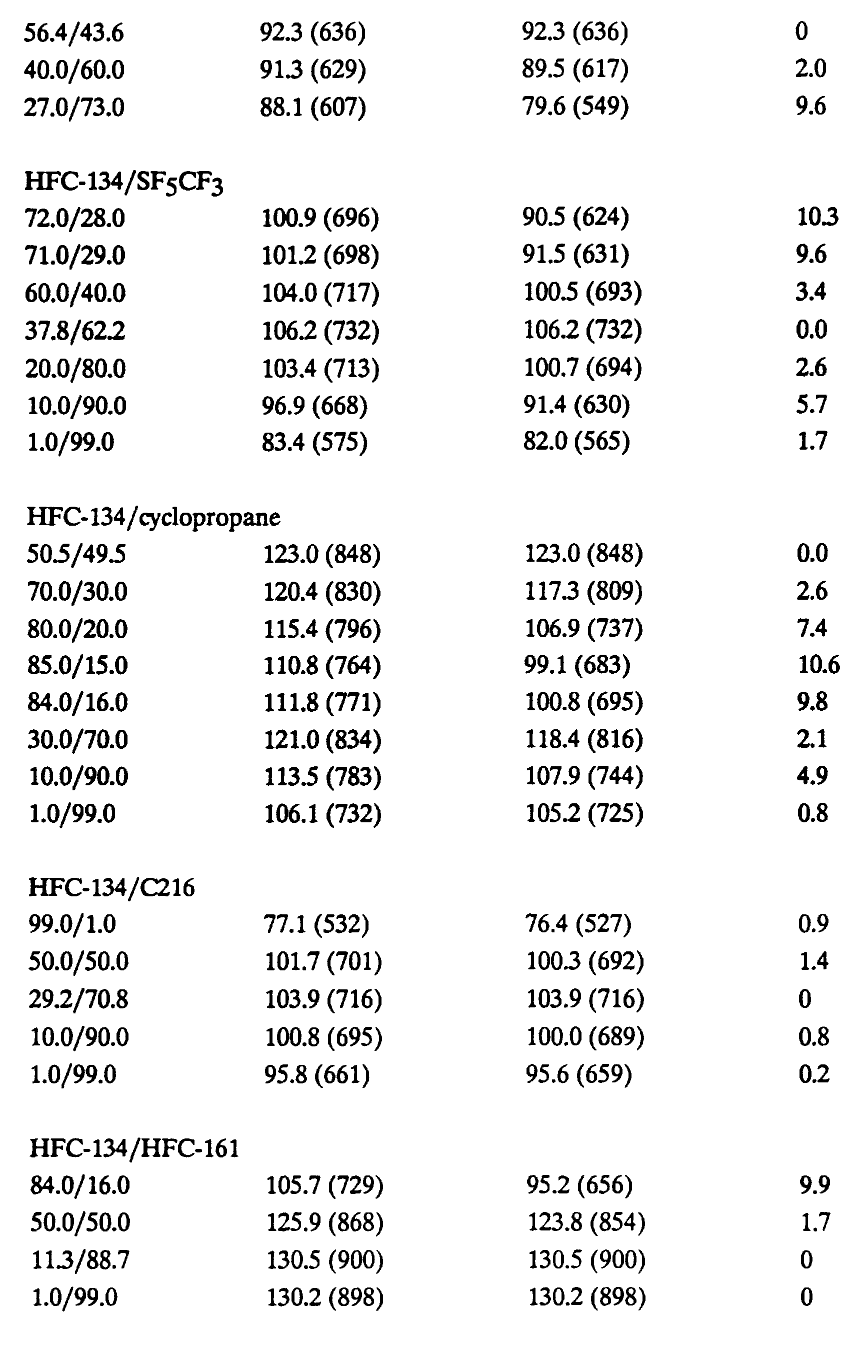

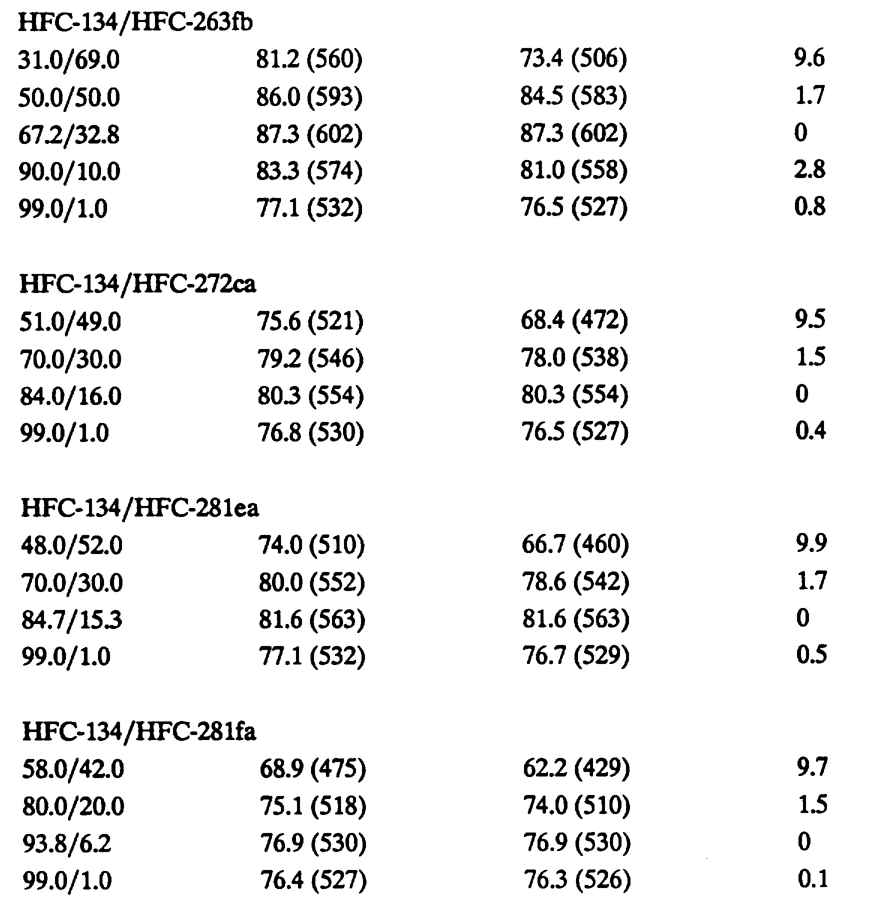

The results of this Example show that these compositions are azeotropic or azeotrope-like because when 50 wt% of an original composition is removed, the vapor pressure of the remaining composition is within about 10% of the vapor pressure of the original composition, at a temperature of 25°C.

### EXAMPLE 3

### Refrigerant Performance

The following table shows the performance of the inventive refrigerants. The data are based on the following conditions.
- Evaporator temperature: 45.0°F (7.2°C)
- Condenser temperature: 130.0°F (54.4°C)
- Subcool temperature: 115.0°F (46.1°C)
- Return gas temperature: 65.0°F (18.3°C)
Compressor efficiency is 75%.

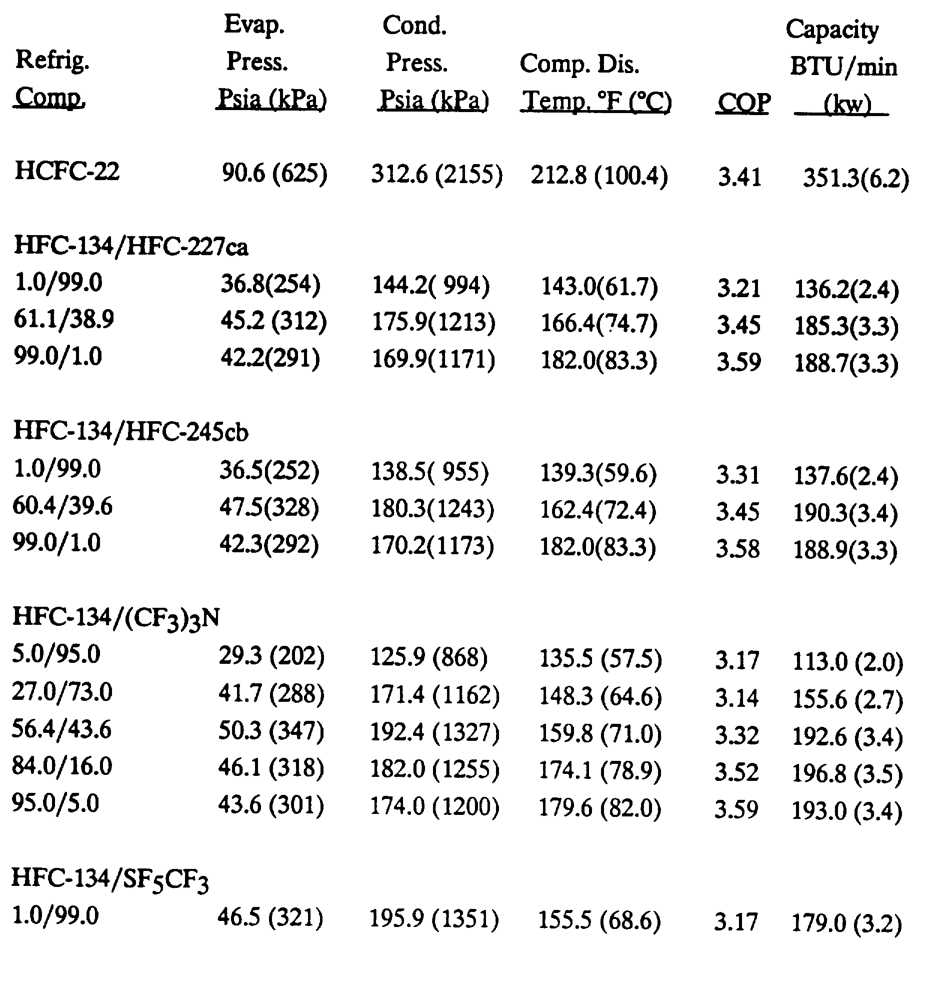

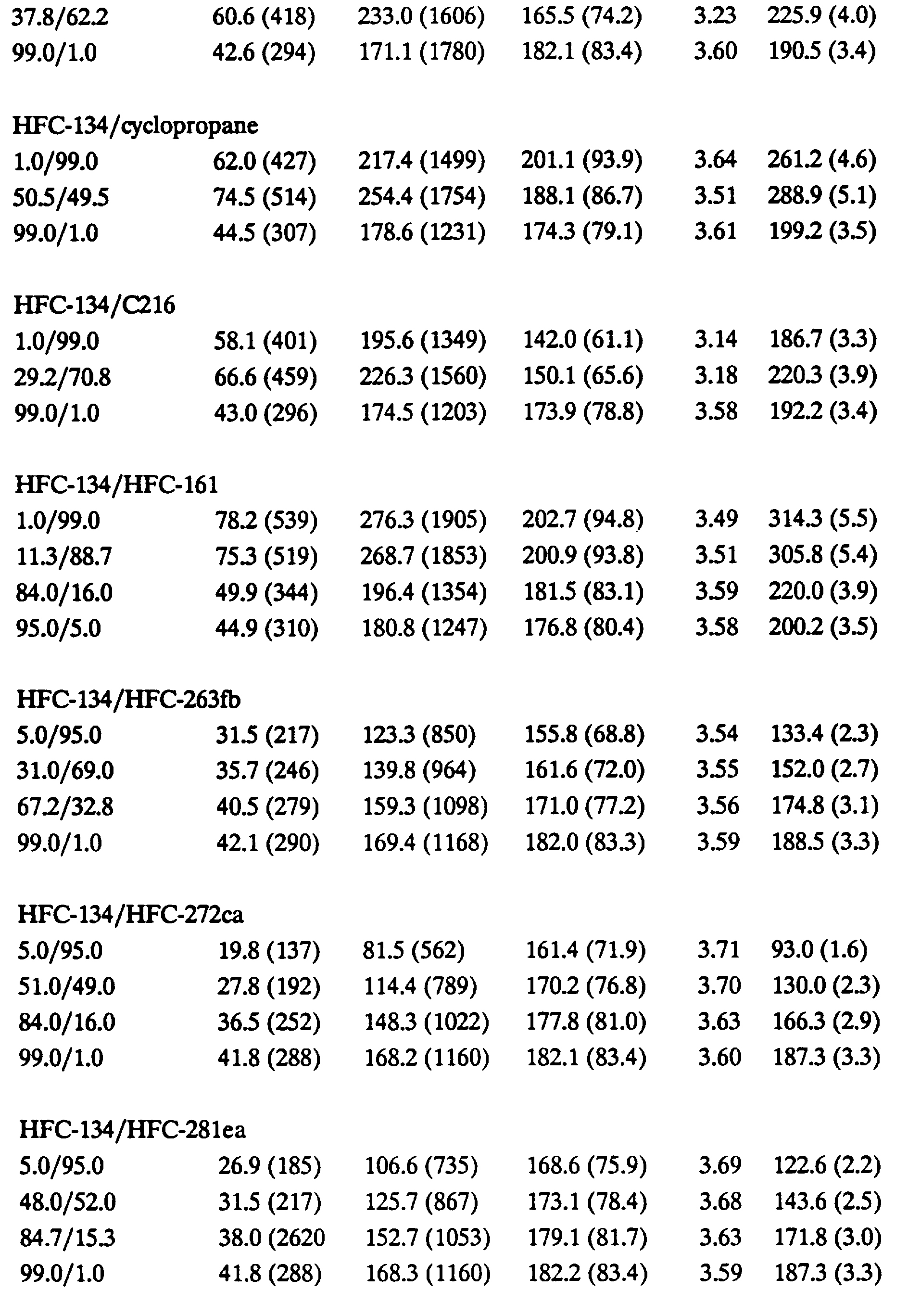

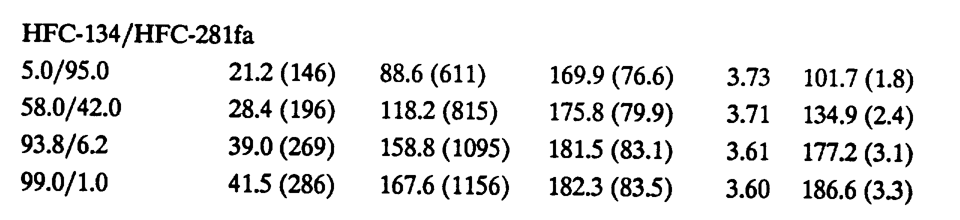

The novel compositions of this invention, including the azeotropic or azeotrope-like compositions, may be used to produce refrigeration by condensing the compositions and thereafter evaporating the condensate in the vicinity of a body to be cooled. The novel compositions may also be used to produce heat by condensing the refrigerant in the vicinity of the body to be heated and thereafter evaporating the refrigerant.

In addition to refrigeration applications, the novel constant boiling or substantially constant boiling compositions of the invention are also useful as aerosol propellants, heat transfer media, gaseous dielectrics, fire extinguishing agents, expansion agents for polyolefins and polyurethanes and power cycle working fluids.

### ADDITIONAL COMPOUNDS

Other components, such as aliphatic hydrocarbons having a boiling point of -60 to + 30°C, hydrofluorocarbonalkanes having a boiling point of -60 to + 30°C, hydrofluoropropanes having a boiling point of between -60 to + 30°C, hydrocarbon esters having a boiling point between -60 to + 30°C, hydrochlorofluorocarbons having a boiling point between -60 to + 30°C, hydrofluorocarbons having a boiling point of -60 to +30°C, hydrochlorocarbons having a boiling point between -60 to + 30°C, chlorocarbons and perfluorinated compounds, can be added to the azeotropic or azeotrope-like compositions described above without substantially changing the properties thereof, including the constant boiling behavior, of the compositions. Examples of such components include the following.

| COMPOUND | FORMULA | Boiling Point, °C |
|---|---|---|
| HC-290 | CH₃CH₂CH₃ | -42°C |
| HCFC-124 | CHClFCF₃ | -12°C |
| FC-600 | CH₃CH₂CH₂CH₃ | 0°C |

Additives such as lubricants, corrosion inhibitors, stabilizers, dyes and other appropriate materials may be added to the novel compositions of the invention for a variety of purposes provides they do not have an adverse influence on the composition for its intended application. Preferred lubricants include esters having a molecular weight greater than 250.

## Claims

1. A refrigerant composition comprising 1,1,2,2-tetrafluoroethane and 1,1,1,2,2,3,3-heptafluoropropane, 1,1,1,2,2-pentafluoropropane, tris(trifluoromethyl)amine, trifluoromethylsulfur pentafluoride, cyclopropane, perfluorocyclopropane, fluoroethane, 1,1,1-trifluoropropane, 2,2-difluoropropane, 2-fluoropropane, or 1-fluoropropane.

2. Effective amounts of 1,1,2,2-tetrafluoroethane and second compound to form an azeotropic or azeotrope-like composition, wherein said second component is 1,1,1,2,2,3,3-heptafluoropropane, 1,1,1,2,2-pentafluoropropane, tris(trifluoromethyl)amine, trifluoromethylsulfur pentafluoride, cyclopropane, perfluorocyclopropane, fluoroethane, 1,1,1-trifluoropropane, 2,2-difluoropropane, 2-fluoropropane or 1-fluoropropane.

3. The azeotropic or azeotrope-like composition of Claim 2, said composition comprising: 1-99 weight percent 1,1,2,2-tetrafluoroethane and 1-99 weight percent 1,1,1,2,2,3,3-heptafluoropropane; 1-99 weight percent 1,1,2,2-tetrafluoroethane and 1-99 weight percent 1,1,1,2,2-pentafluoropropane; 27-84 weight percent 1,1,2,2-tetrafluoroethane and 16-73 weight percent tris(trifluoromethyl)amine; 1-71 weight percent 1,1,2,2-tetrafluoroethane and 29-99 weight percent trifluoromethylsulfur pentafluoride; 1-84 weight percent 1,1,2,2-tetrafluoroethane and 16-99 weight percent cyclopropane; 1-99 weight percent 1,1,2,2-tetrafluoroethane and 1-99 weight percent perfluorocyclopropane; 1-84 weight percent 1,1,2,2-tetrafluoroethane and 16-99 weight percent fluoroethane; 31-99 weight percent 1,1,2,2-tetrafluoroethane and 1-69 weight percent 1,1,1-trifluoropropane; 51-99 weight percent 1,1,2,2-tetrafluoroethane and 1-49 weight percent 2,2-difluoropropane ; 48-99 weight percent 1,1,2,2-tetrafluoroethane and 1-52 weight percent 2-fluoropropane; or 58-99 wt % 1,1,2,2-tetrafluoroethane and 1-42 weight percent 1-fluoropropane.

4. The azeotropic or azeotrope-like composition of Claim 2, said composition comprising:
40-90 weight percent 1,1,2,2-tetrafluoroethane and 10-60 weight percent 1,1,1,2,2,3,3-heptafluoropropane; 30-90 weight percent 1,1,2,2-tetrafluoroethane and 10-70 weight percent 1,1,1,2,2-pentafluoropropane; 40-70 weight percent 1,1,2,2-tetrafluoroethane and 30-60 weight percent tris(trifluoromethyl)amine; 37.8 weight percent 1,1,2,2-tetrafluoroethane and 62.2 weight percent trifluoromethylsulfur pentafluoride; 40-84 weight percent 1,1,2,2-tetrafluoroethane and 16-60 weight percent cyclopropane; 10-50 weight percent 1,1,2,2-tetrafluoroethane and 50-90 weight percent perfluorocyclopropane; 1-50 weight percent 1,1,2,2-tetrafluoroethane and 50-99 weight percent fluoroethane; 50-90 weight percent 1,1,2,2-tetrafluoroethane and 10-50 weight percent 1,1,1 -trifluoropropane; 70-99 weight percent 1,1,2,2-tetrafluoroethane and 1-30 weight percent 2,2-difluoropropane; 70-99 weight percent 1,1,2,2-tetrafluoroethane and 1-30 weight percent 2-fluoropropane; or 80-99 weight percent 1,1,2,2-tetrafluoroethane and 1-20 weight percent 2-fluoropropane.

5. A process for producing refrigeration, comprising condensing a composition of Claim 1, and thereafter evaporating said composition in the vicinity of the body to be cooled.

6. A process for producing refrigeration, comprising condensing a composition of Claim 2, and thereafter said composition in the vicinity of the body to be cooled.

7. A process for producing heat comprising condensing a composition of Claim 1 in the vicinity of a body to be heated, and thereafter evaporating said composition.

8. A process for producing heat comprising condensing a composition of Claim 2 in the vicinity of a body to be heated, and thereafter evaporating said composition.

## Patentansprüche

1. Kühlmittelzusammensetzung, umfassend 1,1,2,2-Tetrafluorethan und 1,1,1,2,2,3,3-Heptafluorpropan, 1,1,1,2,2-Pentafluorpropan, Tris(trifluormethyl)-amin, Trifluormethylschwefelpentafluorid, Cyclopropan, Perfluorcyclopropan, Fluorethan, 1,1,1-Trifluorpropan, 2,2-Difluorpropan, 2-Fluorpropan oder 1-Fluorpropan.

2. Wirksame Mengen von 1,1,2,2-Tetrafluorethan und einer zweiten Verbindung unter Bildung einer azeotropen oder azeotropartigen Zusammensetzung, worin die zweite Komponente 1,1,1,2,2,3,3-Heptafluorpropan, 1,1,1,2,2-Pentafluorpropan, Tris(trifluormethyl)-amin, Trifluormethylschwefelpentafluorid, Cyclopropan, Perfluorcyclopropan, Fluorethan, 1,1,1-Trifluorpropan, 2,2-Difluorpropan, 2-Fluorpropan oder 1-Fluorpropan ist.

3. Azeotrope oder azeotropartige Zusammensetzung nach Anspruch 2, wobei die Zusammensetzung umfaßt: 1-99 Gew.-% 1,1,2,2-Tetrafluorethan und 1-99 Gew.-% 1,1,1,2,2,3,3-Heptafluorpropan, 1-99 Gew.-% 1,1,2,2-Tetrafluorethan und 1-99 Gew.-% 1,1,1,2,2-Pentafluorpropan, 27-84 Gew.-% 1,1,2,2-Tetrafluorethan und 16-73 Gew.-% Tris(trifluormethyl)-amin, 1-71 Gew.-% 1,1,2,2-Tetrafluorethan und 29-99 Gew.-% Trifluormethylschwefelpentafluorid, 1-84 Gew.-% 1,1,2,2-Tetrafluorethan und 16-99 Gew.-% Cyclopropan, 1-99 Gew.-% 1,1,2,2-Tetrafluorethan und 1-99 Gew.-% Perfluorcyclopropan, 1-84 Gew.-% 1,1,2,2-Tetrafluorethan und 16-99 Gew.-% Fluorethan, 31-99 Gew.-% 1,1,2,2-Tetrafluorethan und 1-69 Gew.-% 1,1,1-Trifluorpropan, 51-99 Gew.-% 1,1,2,2-Tetrafluorethan und 1-49 Gew.-% 2,2-Difluorpropan, 48-99 Gew.-% 1,1,2,2-Tetrafluorethan und 1-52 Gew.-% 2-Fluorpropan oder 58-99 Gew.-% 1,1,2,2-Tetrafluorethan und 1-42 Gew.-% 1-Fluorpropan.

4. Azeotrope oder azeotropartige Zusammensetzung nach Anspruch 2, wobei die Zusammensetzung umfaßt: 40-90 Gew.-% 1,1,2,2-Tetrafluorethan und 10-60 Gew.-% 1,1,1,2,2,3,3-Heptafluorpropan, 30-90 Gew.-% 1,1,2,2-Tetrafluorethan und 10-70 Gew.-% 1,1,1,2,2-Pentafluorpropan, 40-70 Gew.-% 1,1,2,2-Tetrafluorethan und 30-60 Gew.-% Tris(trifluormethyl)-amin, 37,8 Gew.-% 1,1,2,2-Tetrafluorethan und 62,2 Gew.-% Trifluormethylschwefelpentafluorid, 40-84 Gew.-% 1,1,2,2-Tetrafluorethan und 16-60 Gew.-% Cyclopropan, 10-50 Gew.-% 1,1,2,2-Tetrafluorethan und 50-90 Gew.-% Perfluorcyclopropan, 1-50 Gew.-% 1,1,2,2-Tetrafluorethan und 50-99 Gew.-% Fluorethan, 50-90 Gew.-% 1,1,2,2-Tetrafluorethan und 10-50 Gew.-% 1,1,1-Trifluorpropan, 70-99 Gew.-% 1,1,2,2-Tetrafluorethan und 1-30 Gew.-% 2,2-Difluorpropan, 70-99 Gew.-% 1,1,2,2-Tetrafluorethan und 1-30 Gew.-% 2-Fluorpropan oder 80-99 Gew.-% 1,1,2,2-Tetrafluorethan und 1-20 Gew.-% 2-Fluorpropan.

5. Verfahren zur Erzeugung von Kälte, umfassend die Kondensation einer Zusammensetzung nach Anspruch 1 und die anschließende Verdampfung der Zusammensetzung in der Nachbarschaft eines zu kühlenden Körpers.

6. Verfahren zur Erzeugung von Kälte, umfassend die Kondensation einer Zusammensetzung nach Anspruch 2 und die anschließende Verdampfung der Zusammensetzung in der Nachbarschaft eines zu kühlenden Körpers.

7. Verfahren zur Erzeugung von Wärme, umfassend die Kondensation einer Zusammensetzung nach Anspruch 1 in der Nachbarschaft eines zu erhitzenden Körpers und die anschließende Verdampfung der Zusammensetzung.

8. Verfahren zur Erzeugung von Wärme, umfassend die Kondensation einer Zusammensetzung nach Anspruch 2 in der Nachbarschaft eines zu erhitzenden Körpers und die anschließende Verdampfung der Zusammensetzung.

## Revendications

1. Composition réfrigérante comprenant du 1,1,2,2-tétrafluoroéthane et du 1,1,1,2,2,3,3-heptafluoropropane, du 1,1,1,2,2-pentafluoropropane, de la tris(trifluorométhyl)amine, du pentafluorure de trifluorométhylsoufre, du cyclopropane, du perfluorocyclopropane, du fluoroéthane, du 1,1,1-trifluoropropane, du 2,2-difluoropropane, du 2-fluoropropane ou du 1-fluoropropane.

2. Des quantités efficaces de 1,1,2,2-tétrafluoroéthane et d'un second composé pour former une composition azéotrope ou semblable à un azéotrope, dans lesquelles ledit second constituant est le 1,1,1,2,2,3,3-heptafluoropropane, le 1,1,1,2,2-pentafluoropropane, la tris(trifluorométhyl)amine, le pentafluorure de trifluorométhylsoufre, le cyclopropane, le perfluorocyclopropane, le fluoroéthane, le 1,1,1-trifluoropropane, le 2,2-difluoropropane, le 2-fluoropropane ou le 1-fluoropropane.

3. Composition azéotrope ou semblable à un azéotrope selon la revendication 2, ladite composition comprenant : 1 à 99 % en poids de 1,1,2,2-tétrafluoroéthane et 1 à 99 % en poids de 1,1,1,2,2,3,3-heptafluoropropane; 1 à 99 % en poids de 1,1,2,2-tétrafluoroéthane et 1 à 99 % en poids de 1,1,1,2,2-pentafluoropropane ; 27 à 84 % en poids de 1,1,2,2-tétrafluoroéthane et 16 à 73 % en poids de tris(trifluorométhyl)amine; 1 à 71% en poids de 1,1,2,2-tétrafluoroéthane et 29 à 99 % en poids de pentafluorure de trifluorométhylsoufre ; 1 à 84 % en poids de 1,1,2,2-tétrafluoroéthane et 16 à 99 % en poids de cyclopropane ; 1 à 99 % en poids de 1,1,2,2-tétrafluoroéthane et 1 à 99 % en poids de perfluorocyclopropane ; 1 à 84 % en poids de 1,1,2,2-tétrafluoroéthane et 16 à 99 % en poids de fluoroéthane ; 31 à 99 % en poids de 1,1,2,2-tétrafluoroéthane et 1 à 69 % en poids de 1,1,1-trifluoropropane ; 51 à 99 % en poids de 1,1,2,2-tétrafluoroéthane et 1 à 49 % en poids de 2,2-difluoropropane ; 48 à 99 % en poids de 1,1,2,2-tétrafluoroéthane et 1 à 52 % en poids de 2-fluoropropane ; ou 58 à 99 % en poids de 1,1,2,2-tétrafluoroéthane et 1 à 42 % en poids de 1-fluoropropane.

4. Composition azéotrope ou semblable à un azéotrope selon la revendication 2, ladite composition comprenant :
40 à 90 % en poids de 1,1,2,2-tétrafluoroéthane et 10 à 60 % en poids de 1,1,1,2,2,3,3-heptafluoropropane ; 30 à 90 % en poids de 1,1,2,2-tétrafluoroéthane et 10 à 70 % en poids de 1,1,1,2,2-pentafluoropropane ; 40 à 70 % en poids de 1,1,2,2-tétrafluoroéthane et 30 à 60 % en poids de tri(trifluorométhyl)amine ; 37,8 % en poids de 1,1,2,2-tétrafluoroéthane et 62,2 % en poids de pentafluorure de trifluorométhylsoufre; 40 à 84 % en poids de 1,1,2,2-tétrafluoroéthane et 16 à 60 % en poids de cyclopropane ; 10 à 50 % en poids de 1,1,2,2-tétrafluoroéthane et 50 à 90 % en poids de perfluorocyclopropane ; 1 à 50 % en poids de 1,1,2,2-tétrafluoroéthane et 50 à 99 % en poids de fluoroéthane ; 50 à 90 % en poids de 1,1,2,2-tétrafluoroéthane et 10 à 50 % en poids de 1,1,1-trifluoropropane ; 70 à 99 % en poids de 1,1,2,2-tétrafluoroéthane et 1 à 30 % en poids de 2,2-difluoropropane ; 70 à 99 % en poids de 1,1,2,2-tétrafluoroéthane et 1 à 30 % en poids de 2-fluoropropane ; ou 80 à 99 % en poids de 1,1,2,2-tétrafluoroéthane et 1 à 20 % en poids de 2-fluoropropane.

5. Procédé de production de réfrigération, comprenant la condensation d'une composition de la revendication 1 puis l'évaporation de ladite composition dans le voisinage du corps à refroidir.

6. Procédé de production de réfrigération, comprenant la condensation d'une composition de la revendication 2, puis l'évaporation de ladite composition dans le voisinage d'un corps à refroidir.

7. Procédé de production de chaleur, comprenant la condensation d'une composition de la revendication 1 dans le voisinage d'un corps à chauffer, puis l'évaporation de ladite composition.

8. Procédé de production de chaleur, comprenant la condensation d'une composition de la revendication 2 dans le voisinage d'un corps à chauffer, puis l'évaporation de ladite composition.
